# EUROPÄISCHE PATENTSCHRIFT

(11) **EP 0 491 260 B1**
(45) Veröffentlichungstag und Bekanntmachung des Hinweises auf die Patenterteilung: **13.03.1996**
(21) Anmeldenummer: 91121120.9
(22) Anmeldetag: 10.12.1991
(51) Int. Cl.: H02B 1/20, H01R 31/02

(54) **Verkabelungsanordnung**
Wiring device
Dispositif de câblage

(30) Priorität: 19.12.1990 DE 4040610
(43) Veröffentlichungstag der Anmeldung: 24.06.1992
(73) Patentinhaber: Volkswagen Aktiengesellschaft, D-38436 Wolfsburg (DE)
(72) Erfinder: Bohlen, Dieter, Dipl.-Ing., W-3171 Osloss (DE); Starchikow, Manfred, W-3178 Calberlah (DE)

(56) Entgegenhaltungen:
- EP-A- 0 242 019
- DE-A- 2 558 420
- DE-C- 3 927 637
- DE-U- 8 709 604
- FR-A- 2 617 565
- GB-A- 2 199 924
- US-A- 4 971 576

## Beschreibung

Die Erfindung bezieht sich auf eine mehrpolige Steckereinheiten und ein mehradriges Zuleitungskabel enthaltende Verkabelungsanordnung zur Herstellung elektrisch leitender Verbindungen der im Oberbegriff des Patentanspruchs 1 genannten Art.

In modernen Arbeitsgerätschaften und modernen Fertigungsanlagen wird für deren Betrieb häufig eine Vielzahl von elektrisch bzw. elektromagnetisch steuerbaren - meist hydraulischen und/oder pneumatischen - Stellgliedern eingesetzt. Diese Stellglieder besitzen unter anderem eine mehrpolige Kontakteinheit mit jeweils einem Massekontakt, im Regelfall einem Schutzkontakt und mindestens einem Steuerkontakt, über den die Steuersignale zur Aussteuerung des Stellgliedes zugeführt werden.

Die mehrpoligen Kontakteinheiten sind dabei jeweils über ein mehradriges Kabel elektrisch mit einem zentralen Klemmenkasten bzw. mit einem zentralen Steuer- oder Schaltschrank verbunden, von dem sie den jeweiligen betrieblichen Steuer- bzw. Regelerfordernissen entsprechend mit den benötigten Steuersignalen versorgt werden. Die mehradrigen Kabel werden dabei im allgemeinen mit den ihnen zugeordneten mehrpoligen Kontakteinheiten mittels korrespondierender mehrpoliger Steckereinheiten verbunden.

Insbesondere dann, wenn mehrere solche mehrpoligen Kontakteinheiten installiert sind, ergeben sich oft größere Kabelstränge, welche häufig über längere Strecken zum zentralen Klemmenkasten bzw. zentralen Steuer- oder Schaltschrank geführt werden. In modernen Fertigungsanlagen der Kraftfahrzeugendmontage sind beispielsweise mitunter 10 000 und mehr Stell- und Steuereinheiten mit je zwei mehrpoligen Kontakteinheiten verbaut. In solchen Anlagen liegt also ein außergewöhnlich hoher Kabelaufwand und ein außergewöhnlich hoher Aufwand im Bereich des zentralen Klemmenkastens bzw. des zentralen Steuer- oder Schaltschrankes vor.

Die Fehlersuche innerhalb der Verkabelung ist wegen der Vielzahl von zu überprüfenden Leitungen und Leitungsverbindungen problematisch und zeitaufwendig; insbesondere bei der Inbetriebnahme sowie beim Neuanlaufen einer solchen Fertigungseinrichtung wird für diese Überprüfung viel Zeit benötigt.

Aus der deutschen Offenlegungsschrift DE 38 22 340 A1 und der deutschen Patentschrift DE 39 27 637 C1 sind Verkabelungsanordnungen mit mehreren mehrpoligen Kontakeinheiten bekannt, die jeweils einen Teil eines Magnetventils mit Doppelansteuerung bilden. Die Magnetventile sind dabei derart ausgebildet, daß der Pneumatik- oder Hydraulikteil und der eigentliche Ventilkörper, der auf einander gegenüberliegenden Seiten elektromagnetische Ventilsteuer- bzw. Stelleinheiten trägt, räumlich voneinander getrennt sind.

Die deutsche Offenlegungsschrift DE 38 22 340 A1 beschreibt eine Anordnung mit mehreren modulartig aufgebauten Magentventilen mit Doppelansteuerung, deren jeweils zwei elektromagnetische Ventilsteuereinheiten tragende Ventilhauptkörper räumlich unmittelbar nebeneinander angeordnet sind. Zur Realisierung der "inneren Verdrahtung" ist zwischen dem Pneumatik- oder Hydraulikteil und dem Ventilhauptkörper eine formstabile Verdrahtungsbox (Adaptereinheit) angeordnet, die einerseits an ihren beiden Enden Buchsenanschlüsse zur Kontaktierung mit korrespondierenden Steckeranschlüssen der beiden Ventileinheiten und andererseits an ihrem einen Ende mit den beiden vorerwähnten Buchsenanschlüssen leitend verbundene Steckeranschlüsse zur Kontaktierung mit einem Zuleitungskabel aufweist.

Um die Nachteile einer formstabilen Verdrahtungsbox (Adaptereinheit), nämlich der Einhaltung enger Bautoleranzen sowohl der Verdrahtungsbox als auch dem eigentlichen Ventilhauptkörper und der mit diesem vereinigten elektromagnetischen Ventilsteuereinheiten, zu beheben, sieht die deutsche Patentschrift DE 39 27 637 C1 vor, die zwischen einer die Pneumatik- bzw. Hydraulikeinheit bildenden Grundplatte und den Ventilkörper liegende Verdrahtungsbox (Adaptereinheit) in seitlichen Zwischenbereichen flexibler, insbesondere längsnachgiebiger zu gestalten.

Die bekannten Verkabelungsanordnungen verringern in einern speziellen Anwendungsfall, nämlich der Anordnung zweier unmittelbar nebeneinander angeordneter Ventilsteuereinheiten eines Magnetventils den Verkabelungsaufwand durch die Verwendung eines gemeinsamen Zuleitungskabels. Für eine Anordnung mit mehreren Magnetventilen ist jedoch jeweils ein eignes Zuleitungskabel vorzusehen und zwar selbst dann, wenn diese Magnetventile räumlich unmittelbar nebeneinander angeordnet sind.

Vor diesem Hintergrund liegt der Erfindung die Aufgabe zugrunde, den Gesamtaufwand für eine Verkabelung in modernen Arbeitsgerätschaften und Fertigungsanlagen mit einer Vielzahl von elektrisch bzw. elektromagnetisch steuerbaren Stellgliedern zu verringern, die Übersichtlichkeit der Verkabelung zu verbessern und die Fehlersuche zu erleichtern.

Diese Aufgabe wird erfindungsgemäß durch die Merkmale des Patentanspruchs gelöst.

Vorteilhafte Ausgestaltungen und Weiterbildungen der Erfindung sind in den Unteransprüchen angegeben.

Erfindungsgemäß werden die mehrpoligen Kontakteinheiten der diversen Stellglieder, Wegeventile o. ä., die im allgemeinen außer einem oder mehreren Steuerkontakten auch einen Massekontakt zum Anschluß an einen Masseleiter und meistens einen zusätzlichen Schutzkontakt zum Anschluß an einen Schutzleiter aufweisen, nicht mehr wie allgemein üblich mit Hilfe einzelner mehradriger Kabel mit den Klemmen eines weiter entfernt liegenden zentralen Klemmenkastens bzw. eines zentralen Steuer- oder Schaltschranks verbunden; vielmehr werden einander benachbarte, das heißt im Vergleich zu ihrem Abstand vom zentralen Klemmenkasten dicht nebeneinander liegende mehrpolige Kontakteinheiten der diversen Stellglieder ect. mit Hilfe eines gemeinsamen mehradrigen Hauptkabels, welches die vergleichsweise große Entfernung zwischen dem zentralen Klemmenkasten und dieser Gruppe mehrpoliger Kontakteinheiten überbrückt, sowie - je nach Anzahl der beteiligten mehrpoligen Kontakteinheiten - eines oder auch mehrerer mehradriger Verteilkabel mit den zugeordneten Klemmen des zentralen Klemmenkastens o. ä. verbunden.

Anstelle von n vergleichsweise langen Einzelkabeln mit jeweils m + 2 Adern (m Steuerleiter sowie ein Masseleiter und ein Schutzleiter) wird nunmehr nur noch ein langes Hauptkabel mit m x n + 2 Adern sowie ein oder mehrere kurze Verteilkabel mit m + 2 Adern benötigt.

Es ist leicht erkennbar, daß der Kabelaufwand hierdurch erheblich reduziert wird. Wenn z. B. jeweils zwei benachbarte dreipolige Kontakteinheiten in dieser Weise mit einem entfernter liegenden zentralen Klemmenkasten verkabelt werden, dann wird der maßgebliche Kabelaufwand etwa um ein Drittel reduziert, weil nunmehr statt zweier langer dreiadriger Einzelkabel im wesentlichen nur noch ein vieradriges Hauptkabel benötigt wird, weil hierbei ein gemeinsamer Masseleiter und ein gemeinsamer Schutzleiter Verwendung finden kann. Es wird aber nicht nur der Kabelaufwand verringert. Auch der Aufwand für den Klemmenkasten kann minimiert werden, weil ein Teil der sonst benötigten Klemmen für Masse- und Schutzleiter in Fortfall kommen kann. Auch wird die Übersichtlichekeit der Verkabelung und der Klemmenkasten-Anschlüsse spürbar verbessert, was sich sowohl bei der Inbetriebnahme als auch bei der späteren Wartung der Anlage sowie bei einer gegebenenfalls erforderlich werdenden Fehlersuche sehr positiv bemerkbar macht.

Bei einer Verkabelungsanordnung mit mehr als zwei benachbarten mehrpoligen Kontakteinheiten enthält nach einer vorteilhaften Ausgestaltung der Erfindung das mehradrige Zuleitungskabel einen Masse- und einen Schutzleiter, eine der Steuerkontakte der Kontakteinheiten entsprechende Anzahl von Steuerleitungen und eine mit einer entsprechenden Anzahl von Steuerkontakten ausgestattete mehrpolige Steckereinheit. Zur Herstellung einer elektrisch leitenden Verbindung der mehrpoligen Steckereinheit und den mehrpoligen Kontakteinheiten sind mehrere zwischengeschaltete Adaptereinheiten vorgesehen, die jeweils eine mehrpolige Eingangs-Steckereinheit, eine mehrpolige Ausgangs-Steckereinheit sowie ein beide miteinander verbindende freiverlegbares und durchgängig flexibles mehradriges Verteilkabel enthalten.

Gemäß einer Weiterbildung der Erfindung kann vorgesehen sein, daß die Adaptereinheiten von der mehrpoligen Kontakteinheit aus sternförmig zu den übrigen mehrpoligen Kontakteinheiten geführt sind und ihre mehradrigen Verteilkabel jeweils einen Masse- und/oder einen Schutzleiter sowie mindestens einen Steuerleiter enthalten. Die Adaptereinheiten können jedoch auch von der ersten mehrpoligen Kontakteinheit aus kaskadenförmig zu den übrigen mehrpoligen Kontakteinheiten geführt sein, wobei ihre mehradrigen Verteilkabel jeweils einen Masse- und/oder einen Schutzleiter sowie eine Summe der Steuerkontakte aller jeweils folgenden mehrpoligen Kontakteinheiten entsprechender Anzahl von Steuerleitern enthalten.

Eine weitere Ausbildung der Erfindung sieht vor, daß die Eingangs-Steckereinheiten der Adaptereinheiten unter Herstellung abzweigender sowie durchgehender elektrisch leitender Verbindungen turmartig zusammengesteckt sind, ob bei einer der beiden endseitgen Eingangs-Steckereinheiten des turmartigen Zusammenbaus mit der mehrpoligen Steckereinheit des Zuleitungskabels und die andere der beiden endseitigen Eingangs-Steckereinheiten mit der ersten mehrpoligen Kontakteinheit kontaktiert ist.

Nach einer vorteilhaften Ausbildung der Erfindung kann sowohl vorgesehen sein, daß die Steckereinheit des Zuleitungskabels mit einer der Adaptereinheiten eine einstückige Steckereinheit bildet, als auch das diese einstückige Steckereinheit mit ihrem flexiblen Verteilkabel und einer weiteren Steckereinheit zum direkten oder indirekten Kontaktieren der zweiten mehrpoligen Kontakteinheit einteilig ausgebildet ist.

Anhand einiger in der Zeichnung dargestellter zum Teil prinzipienhafter Ausführungsbeispiele wird die Erfindung nachstehend näher erläutert.

In der Zeichnung zeigen
- Fig. 1: ein elektrisch steuerbares Stellglied mit zwei mehrpoligen Kontakteinheiten, welche in herkömmlicher Weise verkabelt sind,
- Fig. 2: das gleiche elektrisch steuerbare Stellglied mit einer erfindungsgemäßen Verkabelung,
- Fig. 3: das gleiche Stellglied mit einer leicht abgewandelten erfindungsgemäßen Verkabelung,
- Fig. 4: eine Prinzipdarstellung der in Fig. 2 dargestellten erfindungsgemäßen Verkabelung und
- die Figuren 5 und 6: Prinzipdarstellungen zweier weiterer Varianten der erfindungsgemäßen Verkabelung.

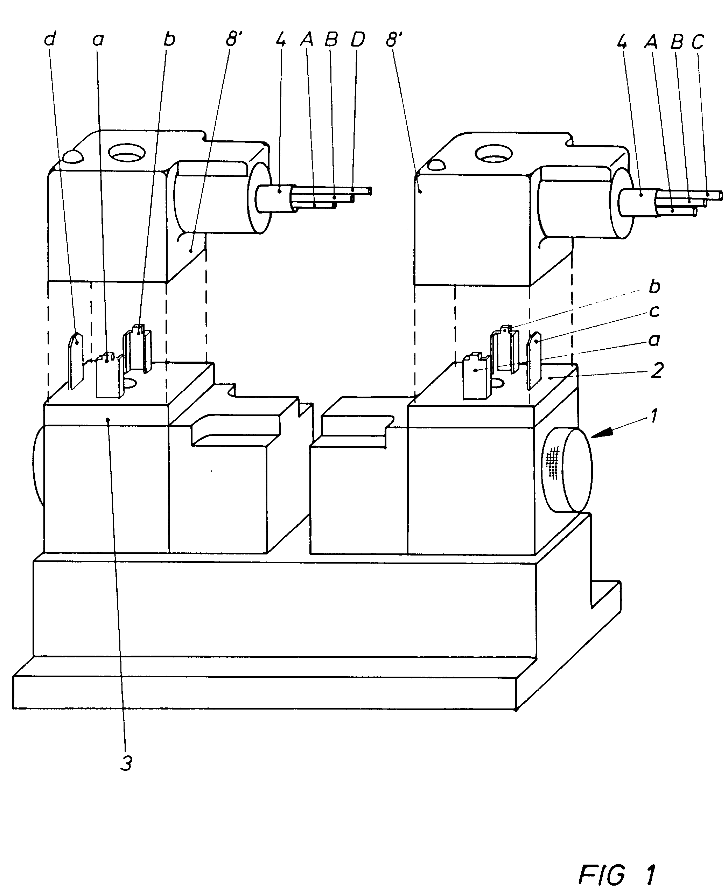

Das in Fig. 1 dargestellte elektrisch steuerbare Stellglied 1, bei dem es sich beispielsweise um ein elektromagnetisch steuerbares hydraulisches oder pneumatisches Wegeventil handeln kann, weist zu seiner Steuerung zwei in einem vergleichsweise geringen Abstand zueinander angeordnete dreipolige Kontakteinheiten 2 und 3 auf. Die beiden Kontakteinheiten enthalten jeweils einen Massekontakt a zum Anschluß eines Masseleiters, einen Schutzkontakt b zum Anschluß eines Schutzleiters sowie jeweils einen Steuerkontakt c bzw. d zum Anschluß eines Steuerleiters, über den die benötigten elektrischen Steuersignale zugeführt werden. Abweichend vom dargestellten Ausführungsbeispiel ist es grundsätzlich auch denkbar, daß jeweils mehr als nur ein solcher Steuerkontakt vorgesehen ist.

Die beiden mehrpoligen Kontakteinheiten 2, 3 werden bei herkömmlicher Verkabelung jeweils über ein mehradriges Kabel 4 mit den Klemmen eines in einem größeren Abstand angeordneten, nicht weiter dargestellten zentralen Klemmenkastens bzw. zentralen Steuer- oder Schaltschranks verbunden. Entsprechend der Kontaktzahl der beiden Kontakteinheiten 2, 3 enthalten die beiden Einzelkabel 4 drei Adern, nämlich einen Masseleiter A, einen Schutzleiter B sowie einen Steuerleiter C bzw. D. Zur Herstellung der elektrisch leitenden Verbindung zwischen den Kontakten der beiden Kontakteinheiten 2, 3 und den Leitern der mehradrigen Kabel 4 sind diese mit Steckereinheiten 8' versehen, welche auf die Kontakteinheiten aufgesteckt werden.

Für die Herstellung der elektrisch leitenden Verbindung zwischen den Kontakten der beiden Kontakteinheiten 2, 3 und dem zentralen Klemmenkasten werden bei einer herkömmlichen Verkabelung also Kabel mit insgesamt sechs Leitern sowie sechs Anschlußklemmen im Klemmenkasten benötigt.

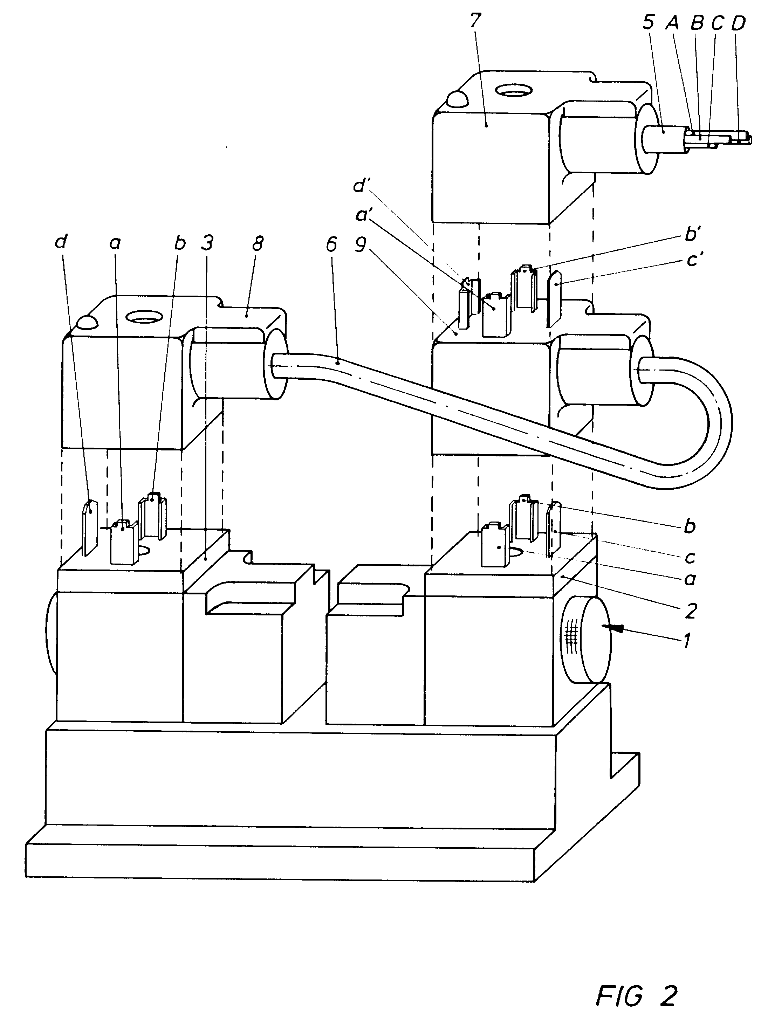

Im Ausführungsbeispiel gemäß Fig. 2 ist ein gleiches elektrisch steuerbares Stellglied 1 mit zwei dicht beieinanderliegenden dreipoligen Kontakteinheiten 2, 3 mit Massekontakten a, Schutzkontakten b und Steuerkontakten c, d dargestellt. Die Verkabelung erfolgt hier erfindungsgemäß durch ein mehradriges Hauptkabel 5, durch welches die vergleichsweise große Entfernung zwischen dem nicht weiter dargestellten zentralen Klemmenkasten bzw. zentralen Steuer- oder Schaltschrank und dem Stellglied 1 bzw. der ersten dreipoligen Kontakteinheit 2 dieses Stellgliedes überbrückt ist, sowie mittels eines mehradrigen Verteilkabels 6, welches von der ersten Kontakteinheit 2 zur zweiten Kontakteinheit 3 führt.

Im Hauptkabel 5 ist eine der Summe der Steuerkontakte c, d der beiden dreipoligen Kontakteinheiten 2, 3 entsprechende Anzahl von Steuerleitern C D sowie ein gemeinsamer Masseleiter A und ein gemeinsamer Schutzleiter B zusammengefaßt; das Hauptkabel 5 ist in diesem Ausführungsbeispiel mit zwei Kontakteinheiten mit jeweils drei Kontakten also vieradrig ausgebildet.

Über eine mehrpolige Steckereinheit ist eine elektrisch leitende Verbindung zwischen den drei Kontakten der ersten Kontakteinheit 2 und den drei zugeordneten Leitern des Hauptkabels 5 hergestellt, d. h. zwischen dem Massekontakt a und dem Masseleiter A, dem Schutzkontakt b und dem Schutzleiter B sowie dem Steuerkontakt c und dem Steuerleiter C.

Die elektrisch leitende Verbindung zwischen den drei Kontakten der zweiten Kontakteinheit 3 und den zugeordneten Leitern des Hauptkabels 5 erfolgt mit Hilfe des von der ersten Kontakteinheit 2 zur zweiten Kontakteinheit 3 geführten dreiadrigen Verteilkabels 6, welches einenends eine auf die zweite Kontakteinheit 3 aufsteckbare dreipolige Steckereinheit 8 und anderenends eine auf die erste Kontakteinheit 2 aufsteckbare adapterartige Steckereinheit 9 besitzt, auf die ihrerseits die vierpolige Steckereinheit 7 des Hauptkabels 5 aufsteckbar ist.

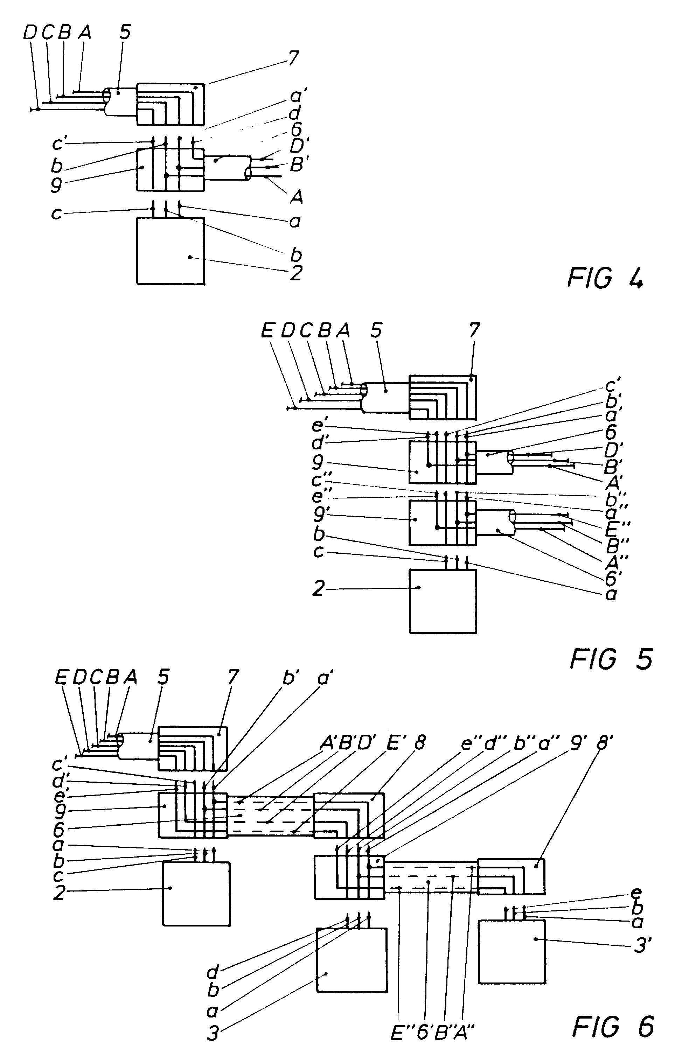

Die adapterartige Steckereinheit 9 des Verteilkabels 6 trägt auf der einen Seite nicht weiter dargestellte, mit den drei Kontakten der ersten Kontakteinheit 2 korrespondierende Kontakte bzw. Kontakthülsen und auf der anderen Seite vier Kontakte, die mit nicht weiter dargestellten korrespondierenden Kontakten bzw. Kontakthülsen der Steckereinheit 7 des Hauptkabels 5 korrespondieren. Über die adapterartige Steckereinheit 9 des Verteilkabels 6 wird also einerseits - über die Kontakte a', b', c' eine elektrisch leitende Verbindung zwischen den drei Kontakten a, b, c der ersten Kontakteinheit 2 und den zugeordneten Leitern A, B und C des Hauptkabels 5 und andererseits - über die Kontakte a', b', d' - eine elektrisch leitende Verbindung zwischen den zu den drei Kontakten a, b, d der zweiten Kontakteinheit 3 führenden drei Leitern des Verteilkabels 6 und den zugeordneten Leitern A, B und D des Hauptkabels 5 hergestellt. In der die diesbezügliche Ausbildung der Fig. 2 prinzipienhaft darstellenden Fig. 4 sind diese Leitungsverzweigungen innerhalb der adapterartigen Steckereinheit 9 gut zu erkennen.

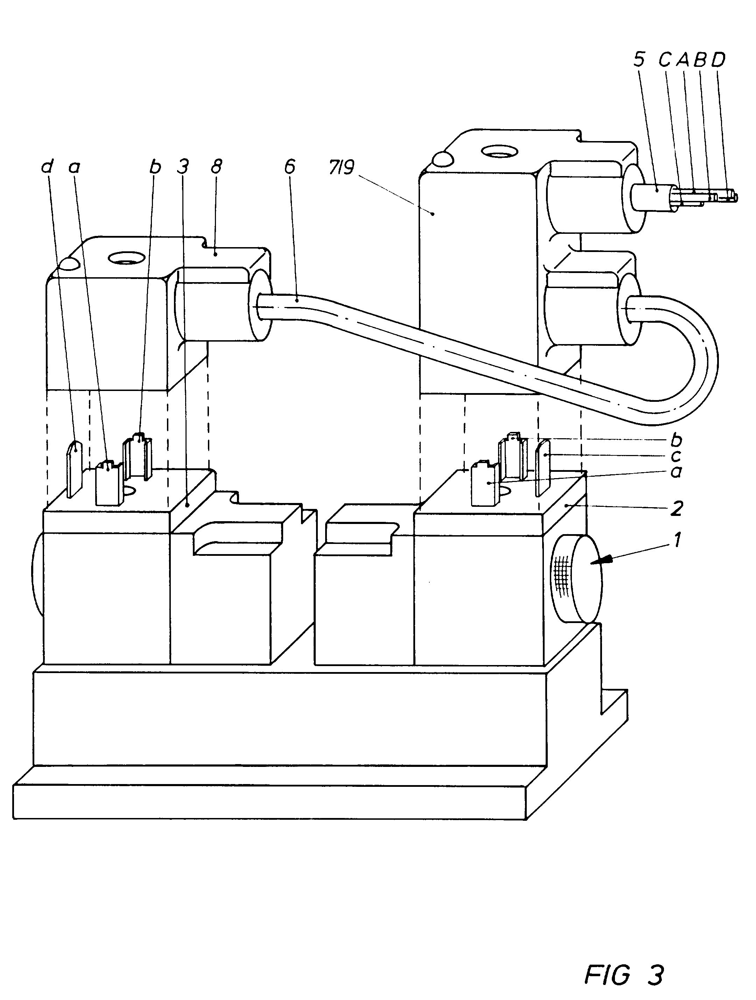

Fig. 3 zeigt ein Ausführungsbeispiel der erfindungsgemäßen Verkabelungsanordnung, welches im wesentlichen dem in Fig. 2 dargestellten Ausführungsbeispiel entspricht; gleiche Bauteile sind demzufolge auch wieder mit den gleichen Bezugsziffern versehen.
Während im Ausführungsbeispiel gemäß Fig. 2 das Hauptkabel 5 mit seiner Steckereinheit 7 und das Verteilkabel 6 mit seinen Steckereinheiten 8, 9 jeweils eigenständige diskrete Bauelemente darstellen, sind im Ausführungsbeispiel gemäß Fig. 3 das Hauptkabel 5, das Verteilkabel 6 sowie die Steckereinheiten 7, 8, 9 zu einer einstückigen Einheit zusammengefaßt, was mitunter von Vorteil sein kann. Im allgemeinen dürfte jedoch das in Fig. 2 dargestellte Prinzip bevorzugt Anwendung finden, weil es letztlich größere Gestaltungsmöglichkeiten bietet und die Verwendung standardisierter Hauptkabel ermöglicht.

Die in den Figuren 2 und 3 dargestellten Ausführungsvarianten der erfindungsgemäßen Verkabelungsanordnung für nur zwei einander benachbarte mehrpolige Kontakteinheiten dürften die weiteste Verbreitung finden, weil elektrisch steuerbare Stellglieder o. ä. mit zwei dicht beieinander angeordneten mehrpoligen Kontakteinheiten in Arbeitsgerätschaften und in industriellen Fertigungsanlagen sehr häufig eingesetzt sind.

Das erfindungsgemäße Verkabelungsprinzip ist mit Vorteil aber auch dann anzuwenden, wenn nicht nur zwei, sondern mehrere mehrpolige Kontakteinheiten, die jeweils einen Massekontakt und/oder einen Schutzkontakt aufweisen, dicht benachbart zueinander angeordnet sind und mit den Klemmenanschlüssen eines entfernter liegenden zentralen Klemmenkastens o. ä. verbunden werden sollen, wobei es keine Rolle spielt, ob die mehrpoligen Kontakteinheiten Teil eines einzigen Stellgliedes oder verschiedener Stellglieder o. ä. sind.

Wenn mehr als zwei benachbarte mehrpolige Kontakteinheiten erfindungsgemäß verkabelt werden sollen, dann müssen entsprechend mehr Verteilkabel vorgesehen werden, um die elektrisch leitende Verbindung zwischen den verschiedenen mehrpoligen Kontakteinheiten und den zugeordneten Leitern des vom zentralen Klemmenkastens kommenden Hauptkabels herzustellen.

Die Verteilkabel können hierbei - wie in Fig. 5 prinzipienhaft dargestellt - von der ersten Kontakteinheit 2 aus, bis zu der ja das Hauptkabel 5 geführt ist, sternförmig zu den übrigen Kontakteinheiten geführt werden, wobei jedes Verteilkabel jeweils einen Masseleiter und/oder einen Schutzleiter sowie einen oder mehrere Steuerleiter aufweist, je nachdem, wieviele Steuerkontakte die anzuschließende mehrpolige Kontakteinheit besitzt.

Die Verteilkabel können aber auch - wie in Fig. 6 prinzipienhaft dargestellt - von der ersten Kontakteinheit 2 aus kaskadenförmig zu den übrigen Kontakteinheiten geführt werden, wobei die stufenförmig hintereinandergeschalteten Verteilkabel dann jeweils einen Masseleiter und/oder einen Schutzleiter sowie eine der Summe der Steuerkontakte der jeweils nachfolgenden Kontakteinheiten entsprechende Anzahl von Steuerleitern aufweisen.

Bei einer sternförmigen Anordnung der Verteilkabel nach Art der Fig. 5 werden die adapterartigen Steckereinheiten 9, 9' der verschiedenen Verteilkabel 6, 6' für den Anschluß an das Hauptkabel 5 turmartig zusammengesteckt, wobei die einenends des turmartigen Steckerzusammenbaus liegende adapterartige Steckereinheit, in Fig. 5 die Steckereinheit 9, mit der mehrpoligen Steckereinheit 7 des Hauptkabels 5 und die anderenends des turmartigen Steckerzusammenbaus liegende adapterartige Steckereinheit, in Fig. 5 die Steckereinheit 9', mit der ersten mehrpoligen Kontakteinheit 2 verbunden ist. Die adapterartigen Steckereinheiten 9, 9' sind bezüglich ihres inneren, d. h. leitungsmäßigen Aufbaus sowie bezüglich ihrer Kontaktbestückung unterschiedlich ausgebildet, weil durch die jeweils näher zum Hauptkabel liegenden adapterartigen Steckereinheiten nicht nur die Leitungsverbindung zur Steuerleitung des eigenen Verteilkabels hergestellt werden muß, sondern auch durchgehende Leitungsverbindungen für die Steuerleitungen der jeweils nachfolgenden Verteilkabel geschaffen werden müssen. Alle adapterartigen Steckereinheiten besitzen natürlich eine durchgehende Masse- und/oder durchgehende Schutzleitung mit entsprechenden Eingangskontakten a', a'' bzw. b' und b'' mit jeweils Leitungsabzweigungen zu den entsprechenden Masse- und/oder Schutzleitern A', A'' bzw. B', B'' ihrer jeweiligen Verteilkabel 6, 6' sowie unterschiedlich viele durchgehende Steuerleitungen c' e' bzw. c'' zur elektrisch leitenden Verbindung der Steuerleiter der jeweils nachfolgenden Verteilkabel bzw. des Steuerkontakts / der Steuerkontakte der ersten Kontakteinheit 2.

Es versteht sich, daß die Zahl der Adern des Hauptkabels 5 mit der Zahl der angeschlossenen mehrpoligen Kontakteinheiten größer wird, da die Summe der anzuschließenden Steuerkontakte größer wird. Im Ausführungsbeispiel gemäß Fig. 5, wo insgesamt drei einander benachbarte dreipolige Kontakteinheiten, von denen nur die erste Kontakteinheit 2 dargestellt ist, versorgt werden, ist das Hauptkabel 5 fünfadrig ausgebildet; neben den Masse- und Schutzleitern A, B sind noch drei Steuerleiter C bis E zur Versorgung der Steuerkontakte der drei Kontakteinheiten vorgesehen.

Das Ausführungsbeispiel gemäß Fig. 6 zeigt eine Anordnung, bei der wie in Fig. 5 drei einander benachbarte Kontakteinheiten 2 bis 3' vorgesehen sind, die jeweils drei Kontakte besitzen, nämlich jeweils einen Massekontakt a, einen Schutzkontakt b sowie einen Steuerkontakt c bzw. d bzw. e.

Das Grundprinzip dieser Verkabelungsvariante entspricht dem der übrigen Ausführungsbeispiele. Ein Hauptkabel 5, welches einen gemeinsamen Masseleiter A, einen gemeinsamen Schutzleiter B sowie eine der Summe der Steuerkontakte c bis e der angeschlossenen mehrpoligen Kontakteinheiten 2 bis 3' entsprechende Anzahl von Steuerleitern C bis E enthält, überbrückt die vergleichsweise große Entfernung zwischen dem nicht weiter dargestellten zentralen Klemmenkasten und der ersten mehrpoligen Kontakteinheit 2, während die weitere elektrisch leitende Verbindung zu den beiden anderen mehrpoligen Kontakteinheiten 3, 3' mittels zweier Verteilkabel 6, 6' erfolgt.

Im Gegensatz zum Ausführungsbeispiel gemäß Fig. 5 sind hier die adapterartigen Steckereinheiten 9, 9' der Verteilkabel 6, 6' nicht turmartig zusammengesteckt und dann gemeinsam mit der Steckereinheit 7 des Hauptkabels 5 kontaktiert. Vielmehr ist lediglich die adapterartige Steckereinheit 9 des von der ersten Kontakteinheit 2 zur zweiten Kontakteinheit 3 führenden ersten Verteilkabels 6 zwischen die erste Kontakteinheit 2 und die Steckereinheit 7 des Hauptkabels 5 gesteckt, wodurch einerseits - über die Kontakte a' bis c' - eine leitungsmäßige Verbindung zwischen den drei Kontakten a bis c der ersten Kontakteinheit 2 und den zugeordneten Kontakten bzw. Kontakthülsen A bis C der Steckereinheit 7 des Hauptkabels 5 und andererseits - über die Kontakte a', b' sowie d', e' - eine leitungsmäßige Verbindung zu den Leitungen des vieradrig ausgebildeten ersten Verteilkabels 6 hergestellt wird. In entsprechender Weise ist die adapterartige Steckereinheit 9' des von der zweiten Kontakteinheit 3 zur dritten Kontakteinheit 3' führenden zweiten Verteilkabels 6 zwischen die zweite Kontakteinheit 3 und die vierpolige Steckereinheit 8 des ersten Verteilkabels 6 zwischengeschaltet, wodurch einerseits - über die Kontakte a'' b'', d'' - eine leitungsmäßige Verbindung zwischen den drei Kontakten a bis d der zweiten Kontakteinheit 3 und den zugeordneten Kontakten bzw. Kontakthülsen A', B', D' der Steckereinheit 8 sowie andererseits - über die Kontakte a'', b'', e'' - eine leitungsmäßige Verbindung zwischen den Leitern A'' bis E'' des dreiadrigen zweiten Verteilkabels 6' und den zugeordneten Kontakten bzw. Kontakthülsen A', B', E' der Steckereinheit 8 hergestellt wird. Die Verbindung der drei Kontakte a bis e der dritten Kontakteinheit 3' erfolgt dann mittels einer üblichen dreipoligen 8'.

Die prinzipienhaften Darstellungen der Figuren 5 und 6 lassen sehr deutlich erkennen, daß die Reduzierung des Kabel- und Anschlußklemmen-Aufwandes um so stärker ins Gewicht fällt und die Verbesserung der Übersichtlichkeit der Verkabelung um so augenfälliger wird, je mehr einander benachbarte mehrpolige Kontakteinheiten über ein gemeinsames Hauptkabel verkabelt werden. In den Ausführungsbeispielen der Figuren 5 und 6 mit drei jeweils dreipoligen Kontakteinheiten wird der Kabelaufwand für die Überbrückung des vergleichsweise großen Abstandes zwischen dem zentralen Klemmenkasten o. ä. und dieser Gruppe mehrpoliger Kontakteinheiten z. B. von zuvor erforderlichen neun Leitern (drei dreiadrige Einzelkabel) auf nur noch benötigte fünf Leiter reduziert, d. h. nahezu halbiert. In entsprechender Weise werden im zentralen Klemmenkasten bzw. im zentralen Steuer- oder Schaltschrank für den Anschluß dieser drei Kontakteinheiten 2 bis 3' statt zuvor neun Anschlußklemmen nur noch fünf Anschlußklemmen benötigt, da für sie nunmehr nur noch eine - gemeinsame - Masse-Anschlußklemme und nur noch eine - gemeinsame - Schutz-Anschlußklemme benötigt wird, wodurch der Raumbedarf nachhaltig verringert und die Übersichtlichkeit und Überprüfbarkeit dieser Anschlüsse spürbar verbessert wird.

## Patentansprüche

1. Verkabelungsanordnung, die ein mehradriges Zuleitungskabel (Hauptkabel 5) mit einer mehrpoligen Steckereinheit (7) zur Herstellung elektrisch leitender Verbindungen zwischen Kontakten (Anschlußklemmen) eines zentralen Klemmenkastens oder eines zentralen Steuer- oder Schaltschranks und Kontakten (a bis e) mindestens zweier einander benachbarter und mit voneinander unabhängigen Steuersignalen zu versorgender mehrpoliger Kontakteinheiten (2, 3, 3') elektrisch steuerbarer Stellglieder aufweist, wobei
- jede mehrpolige Kontakteinheit (2, 3, 3') jeweils einen Massekontakt (a) und/oder einen Schutzkontakt (b) sowie mindestens einen Steuerkontakt (c bis e) aufweist,
- das mehradrige Zuleitungskabel (Hauptkabel 5) einen Masseleiter (A) und/oder einen Schutzleiter (B) sowie eine Anzahl von Steuerleitern (C, D) enthält, die der Summe der Steuerkontakte (c, d) der zumindest zwei mehrpoligen kontakeinheiten (2, 3) entspricht, und
- zur Herstellung einer elektrisch leitenden Verbindung zwischen der mehrpoligen Steckereinheit (7) des Zuleitungskabels (Hauptkabel 5) und zwei der mehrpoligen Kontakteinheiten (2, 3) eine zwischengeschaltete Adaptereinheit vorgesehen ist, welche einenends eine mehrpolige Eingangs-Steckereinheit (9), die einerseits mit der mehrpoligen Steckereinheit (7) des Zuleitungskabels (5) und andererseits mit der ersten dieser beiden mehrpoligen Kontakteinheiten (z. B. 2) kontaktierbar ist, und anderenends eine mit der zweiten dieser beiden mehrpoligen Kontakteinheiten (z. B. 3) kontaktierbare mehrpolige Ausgangs-Steckereinheit (8) enthält,
**dadurch gekennzeichnet,** daß die Leitungsverbindung der Adaptereinheit zwischen Eingangs-Steckereinheit (9, 9') und Ausgangs-Steckereinheit (8, 8') jeweils als frei verlegbares, durchgängig flexibles mehradriges Kabel (Verteilkabel 6) ausgebildet ist.

2. Verkabelungsanordnung nach Anspruch 1, mit mehr als zwei benachbarten mehrpoligen Kontakteinheiten (2, 3, 3'), dadurch gekennzeichnet, daß das mehradrige Zuleitungskabel (5) eine der Steuerkontakte (c bis e) der Kontakteinheiten (2, 3, 3') entsprechende Anzahl von Steuerleitungen (C bis E) und eine mit einer entsprechenden Anzahl von Steuerkontakten ausgestattete mehrpolige Steckereinheit (7) enthält,
und daß zur Herstellung einer elektrisch leitenden Verbindung der mehrpoligen Steckereinheit (7) und den mehrpoligen Kontakteinheiten (2, 3, 3') mehrere zwischengeschaltete Adaptereinheiten vorgesehen sind, die jeweils eine mehrpolige Eingangs-Steckereinheit (9, 9'), eine mehrpolige Ausgangs-Steckereinheit (8, 8') sowie ein beide miteinander verbindendes, frei verlegbares und durchgängig flexibles mehradriges Kabel (Verteilkabel 6) enthalten.

3. Verkabelungsanordnung nach Anspruch 2, dadurch gekennzeichnet, daß die Adaptereinheiten (9, 6, 8; 9', 6', 8') von der ersten mehrpoligen Kontakteinheit (2) aus sternförmig zu den übrigen mehrpoligen Kontakteinheiten (3, 3') geführt sind und ihre mehradrigen Kabel (Verteilkabel 6, 6') jeweils einen Masseleiter (A', A") und/oder einen Schutzleiter (B', B") sowie mindestens einen Steuerleiter (D', E") enthalten.

4. Verkabelungsanordnung nach Anspruch 2, dadurch gekennzeichnet, daß die Adaptereinheiten (9, 6, 8; 9', 6', 8') von der ersten mehrpoligen Kontakteinheit (2) aus kaskadenförmig zu den übrigen mehrpoligen Kontakteinheiten (3, 3') geführt sind und ihre mehradrigen Kabel (Verteilkabel 6, 6') jeweils einen Masseleiter (A', A") und/oder einen Schutzleiter (B', B") sowie eine der Summe der Steuerkontakte aller jeweils folgenden mehrpoligen Kontakteinheiten (3, 3') entsprechende Anzahl von Steuerleitem (D', D'; E") enthalten.

5. Verkabelungsanordnung nach Anspruch 2 oder 3, dadurch gekennzeichnet, daß die Eingangs-Steckereinheiten (9, 9') der Adaptereinheiten unter Herstellung abzweigender sowie durchgehender elektrisch leitender Verbindungen turmartig zusammengesteckt sind, wobei eine der beiden endseitigen Eingangs-Steckereinheiten (z. B. 9) des turmartigen Zusammenbaus mit der mehrpoligen Steckereinheit (7) des Zuleitungskabels (Hauptkabel 5) und die andere der beiden endseitigen Eingangs-Steckereinheiten (z. B. 9') mit der ersten mehrpoligen Kontakteinheit (2) kontaktiert ist.

6. Verkabelungsanordnung nach einem der Ansprüche 1 bis 5, dadurch gekennzeichnet, daß die Steckereinheit (7) des Zuleitungskabels (Hauptkabel 5) mit einer der Adaptereinheiten (9) eine einstückige Steckereinheit (7/9) bildet.

7. Verkabelungsanordnung nach Anspruch 6, dadurch gekennzeichnet, daß das mehradrige Zuleitungskabel (5) mit der einstückigen Steckereinheit (7/9) zum Kontaktieren der Kontakte (a, b, c) der ersten der mindestens zwei mehrpoligen Kontakteinheiten (2), eines der durchgängig flexiblen Verteilkabel (6) und einer weiteren mehrpoligen Steckereinheit (8) zum direkten oder - bei Zwischenschaltung weiterer Adaptereinheiten - indirekten Kontaktieren der zweiten mehrpoligen Kontakteinheit (3) einstückig ausgebildet ist.

## Claims

1. Wiring arrangement which comprises a multi-core supply lead (main lead 5) having a multi-pole connecting unit (7) for the purpose of producing electric conductive connections between contacts (connecting terminals) of a central terminal box or a central control box or switch cupboard and contacts (a to e) at least of two multi-pole contact units (2, 3, 3') of electrically controlled adjusting members, which contact units are adjacent to each other and are to be supplied with control signals which are independent of each other, wherein
- each multi-pole contact unit (2, 3, 3') comprises in each case an earthing contact (a) and/or a non-fused earthed contact (b) and at least one control contact (c to e),
- the multicore supply lead (main lead 5) includes an earthing conductor (A) and/or a non-fused earthed conductor (B) and a number of control conductors (C,D), which number corresponds to the total of the control contacts (c,d) of at least two multi-pole contact units (2, 3), and
- an interpositioned adaptor unit is provided for the purpose of producing an electric conductive connection between the multi-pole connecting unit (7) of the supply lead (main lead 5) and two of the multi-pole contact units (2, 3), which adaptor unit comprises at one end a multi-pole input-connecting unit (9), which can be contacted at one end by the multi-pole connecting unit (7) of the supply lead (5) and on the other side by the first of these two multi-pole contact units (e.g. 2), and at the other end a multi-pole output connecting unit (8) which can be contacted by the second of these two multi-pole contact units (e.g.3),
characterised in that the lead connection of the adaptor unit between the input connecting unit (9,9') and the output connecting unit (8, 8') is formed in each case as a freely installable, universal multi-core cable (distribution cable 6).

2. Wiring arrangement according to claim 1, having more than two adjacent multipole contact units (2, 3, 3'), characterised in that the multi-core supply lead (5) comprises a number of control lines (C to E) which corresponds to the control contacts (c to e) of the contact units (2, 3, 3') and a multi-pole connecting unit (7) which is equipped with a corresponding number of control contacts,
and that a plurality of interpositioned adaptor units are provided for the purpose of producing an electric conductive connection of the multi-pole connecting unit (7) and the multi-pole contact units (2, 3, 3'), which adaptor units comprise in each case a multi-pole input connecting unit (9, 9'), a multi-pole output connecting unit (8,8') and connecting the two a freely installable and universal flexible multi-core cable (distribution cable 6).

3. Wiring arrangement according to claim 2, characterised in that the adaptor units (9, 6, 8; 9', 6', 8') are directed from the first multi-pole contact unit (2) in the shape of a star to the remaining multi-pole contact units (3, 3') and their multi-core cables (distribution cable 6, 6') comprise in each case an earthing conductor (A', A") and/or a non-fused earthed conductor (B', B") and at least one control conductor (D', E").

4. Wiring arrangement according to claim 2, characterised in that the adaptor units (9, 6, 8; 9', 6', 8') are directed from the first multi-pole contact unit (2) in a cascade manner to the remaining multi-pole contact units (3, 3') and their multi-core cables (distribution cable 6, 6') comprise in each case an earthing conductor (A', A") and/or a non-fused earthed conductor (B', B") and a number of control conductors (D', D', E") which corresponds to the total of control contacts of all respective following multi-pole contact units (3, 3').

5. Wiring arrangement according to claim 2 or 3, characterised in that the input connecting units (9, 9') of the adaptor units are combined together in a tower-like manner producing branching and continuous electric conductive connections, wherein one of the two end-side input connecting units (e.g. 9) of the tower-like assembly is contacted by the multipole connecting unit (7) of the supply lead (main lead 5) and the other of the two end-side input connecting units (e.g. 9') is contacted by the first multi-pole contact unit (2).

6. Wiring arrangement according to any one of claims 1 to 5, characterised in that the connecting unit (7) of the supply lead (main lead 5) together with one of the adaptor units (9) forms a one-piece connecting unit (7/9).

7. Wiring arrangement according to claim 6, characterised in that the multi-core supply lead (5) is formed as a unitary construction with the one-piece connecting unit (7/9) for the purpose of contacting the contacts (a, b,c) of the first of the at least two multi-pole contact units (2), one of the universal flexible distribution cable (6) and a further multi-pole connecting unit (8) for the purpose of contacting the second multi-pole contact unit (3) either directly or indirectly by virtue of interpositioning further adaptor units.

## Revendications

1. Dispositif de câblage, qui présente un câble d'alimentation à plusieurs conducteurs (câble principal 5), avec une unité de connexion à plusieurs pôles (7) servant à établir des liaisons électriquement conductrices entre des contacts (bornes de raccordement) d'un boîtier central de bornes ou d'une armoire centrale de commande ou de branchement et des contacts (a à e) d'au moins deux unités de contact (2, 3, 3') d'organes de réglage pouvant être commandés électriquement, unités de contact (2, 3, 3') à plusieurs pôles, à alimenter par des signaux de commande indépendants les uns des autres, dispositif dans lequel:
- chaque unité de contact à plusieurs pôles (2, 3, 3') présente respectivement un contact de mise à la masse (a) et/ou un contact de mise à la terre (b) ainsi qu'au moins un contact de commande (c à e),
- le câble d'alimentation à plusieurs conducteurs (câble principal 5) contient un conducteur de mise à la masse (A) et/ou un conducteur de mise à la terre (B) ainsi qu'un certain nombre de conducteurs de commande (C, D), qui correspond à la somme des contacts de commande (c, d) d'au moins deux unités de contact à plusieurs pôles (2, 3) et
- il est prévu, pour établir une liaison électriquement conductrice entre l'unité de connexion à plusieurs pôles (7) du câble d'alimentation (câble principal 5 ) et deux des unités de contact à plusieurs pôles (2, 3), une unité d'adaptateur montée entre elles, qui contient à une extrémité une unité de connexion d'entrée (9) à plusieurs pôles, qui peut être mise en contact d'une part avec l'unité de connexion à plusieurs pôles (7) du câble d'alimentation (5) et d'autre part avec la première de ces deux unités de contact (par exemple l'unité de contact 2) à plusieurs pôles, et à l'autre extrémité contient une unité de connexion de sortie (8), à plusieurs pôles, qui peut venir en contact avec la deuxième de ces unités de contact à plusieurs pôles (par exemple l'unité 3), dispositif de câblage caractérisé en ce que la liaison par conducteurs de l'unité d'adaptateur entre l'unité de connexion d'entrée (9, 9') et l'unité de connexion de sortie (8, 8') est constituée sous la forme d'un câble (câble de répartition 6) à plusieurs conducteurs, flexible d'un bout à l'autre, que l'on peut librement déplacer.

2. Dispositif de câblage selon la revendication 1, avec plus de deux unités de contact voisines à plusieurs pôles (2, 3, 3'), caractérisé en ce que le câble d'alimentation à plusieurs conducteurs (5) contient un nombre de conducteurs de commande (C à E) qui correspond aux contacts de commande (c à e) des unités de contact (2, 3, 3') et une unité de connexion (7) à plusieurs pôles équipée d'un nombre correspondant de contacts de commande, et en ce que, pour réaliser une liaison électriquement conductrice de l'unité de connexion à plusieurs pôles (7) et des unités de contact à plusieurs pôles (2, 3, 3'), il est prévu plusieurs unités d'adaptateurs, branchées entre les précédentes, unités d'adaptateurs qui contiennent respectivement une unité de connexion d'entrée à plusieurs pôles (9, 9'), une unité de connexion de sortie à plusieurs pôles (8, 8'), ainsi qu'un câble (câble de répartition 6) à plusieurs conducteurs, flexible de bout en bout et que l'on peut déplacer librement.

3. Dispositif de câblage selon la revendication 2, caractérisé en ce que les unités d'adaptateur (9, 6, 8; 9', 6', 8') vont de la première unité de contact à plusieurs pôles (2) sous forme d'étoile aux autres unités de contact à plusieurs pôles (3, 3') et en ce que leurs câbles à plusieurs conducteurs (câbles de répartition 6, 6') contiennent respectivement un conducteur de mise à la masse (A', A'') et/ou un conducteur de mise à la terre (B', B''), ainsi qu'au moins un conducteur de commande (D', E'').

4. Dispositif de câblage selon la revendication 2, caractérisé en ce que les unités d'adaptateur (9, 6, 8; 9', 6', 8') vont à partir de la première unité à plusieurs pôles (2) sous forme de cascade aux autres unités de contact à plusieurs pôles (3, 3') et en ce que leurs câbles à plusieurs conducteurs (câbles de répartition 6, 6') contiennent respectivement un conducteur de mise à la masse (A', A'') et/ou un conducteur de mise à la terre (B', B'') ainsi qu'un nombre de conducteurs de commande (D'; E" qui correspond à la somme des contacts de commande de toutes les unités de contact à plusieurs pôles respectivement suivantes (3, 3').

5. Dispositif de câblage selon la revendication 2 ou 3, caractérisé en ce que les unités de connexion d'entrée (9, 9') des unités d'adaptateur sont rassemblées sous la forme d'une tour en réalisant des liaisons électriquement conductrices de dérivation ainsi que des liaisons électriquement conductrices traversantes, l'une des deux unités terminales de connexion d'entrée (par exemple l'unité 9) du rassemblement en forme de tour étant mise en contact avec l'unité de connexion à plusieurs pôles (7) du câble d'alimentation (câble principal 5) et l'autre unité terminale de connexion d'entrée (par exemple l'unité 9') étant mise en contact avec la première unité de contact à plusieurs pôles (2).

6. Dispositif de câblage selon l'une des revendications 1 à 5, caractérisé en ce que l'unité de connexion (7) du câble d'alimentation (câble principal 5) forme avec l'une des unités d'adaptateur (9) une unité de connexion d'une seule pièce (7/9).

7. Dispositif de câblage selon la revendication 6, caractérisé en ce que le câble d'alimentation à plusieurs conducteurs (5) est constitué d'une seule pièce avec l'unité de connexion d'une seule pièce (7/9) qui sert à mettre en contact les contacts (a, b, c) de la première des au moins deux unités de contact à plusieurs pôles (2), de l'un des câbles de répartition flexibles de bout en bout (6) et d'une autre unité de connexion à plusieurs pôles (8) pour la mise en contact directe ou - dans le cas de l'interposition d'autres unités d'adaptateurs - , pour la mise en contact indirecte de la deuxième unité de contact à plusieurs pôles (3).
